# EUROPEAN PATENT APPLICATION

(11) **EP 4 830 852 A1**
(43) Date of publication of application: **28.10.2026**
(21) Application number: 25171668.4
(22) Date of filing: 22.04.2025
(51) Int. Cl.: B22F 10/50, B22F 10/25, B22F 12/10, B22F 12/90, B23K 9/04, B33Y 10/00, B33Y 30/00, B33Y 40/00, B33Y 50/02

(54) **METHOD AND SYSTEM FOR REGULATING THE THERMAL STATE IN ADDITIVE MANUFACTURING**

(71) Applicant: Katholieke Universiteit Leuven, 3000 Leuven (BE)
(72) Inventor: OZANER, Ozan Can, 3000 Leuven (BE); SHARMA, Abhay, 3000 Leuven (BE); TALEMI, Reza, 3000 Leuven (BE); TJAHJOWIDODO, Tegoeh, 3000 Leuven (BE)

(57) **Abstract**

The present invention relates to a system and method for regulating a thermal state of a deposition layer in a layer-by-layer additive manufacturing process, wherein said deposition layer being deposited from a material deposition tool on a substrate along a deposition direction, the method comprising: monitoring, using thermal monitoring means, a thermal state of said deposition layer, wherein said thermal state is represented by a cooling rate and a temperature at one or more locations and/or within a zone of said deposition layer; calculating, based on a comparison between said monitored thermal state of said deposition layer and predetermined threshold values of desired cooling rates and/or temperatures, an amount of heat to be applied to said one or more locations and/or within said zone of said deposition layer, wherein said amount of heat is sufficient to modify said monitored thermal state to at least the predetermined threshold temperature; applying, using an external heating system, said calculated amount of heat to said one or more locations and/or within said zone of said deposition layer, thereby regulating the thermal state of said deposition layer

## Description

### Field of the invention

The present invention relates to the field of additive manufacturing, and more particularly to methods for regulating the thermal state of a deposition layer during a layer-by-layer manufacturing process, such as Wire Arc Additive Manufacturing (WAAM), to ensure process stability and part quality.

### Background of the invention

Layer-by-layer additive manufacturing (AM) is a rapidly advancing production methodology that enables the fabrication of three-dimensional components by sequentially depositing material according to a digital model. This approach allows for the creation of geometrically complex, large-scale parts with high material efficiency and minimal waste. Various additive manufacturing processes exist, including powder bed fusion, directed energy deposition, and wire-based methods such as Wire and Arc Additive Manufacturing (WAAM). These technologies are increasingly adopted in sectors such as aerospace, automotive, energy, and marine, where the demand for high-performance, customized, and cost-effective manufacturing solutions continues to grow. Additive manufacturing supports the use of a wide range of materials, including aluminum alloys, stainless steels, titanium alloys, and nickel-based superalloys, thereby offering significant flexibility. The digital control inherent to these processes enables precise regulation of the manufacturing workflow, reduces lead times, and facilitates the production of high-quality components.

Despite the advantages of additive manufacturing, the intrinsic layer-by-layer nature of the process often leads to surface irregularities, residual stresses, and anisotropic microstructures. These factors can result in variations in mechanical properties throughout the manufactured component. Ensuring consistent structural performance and reliability is therefore a major challenge, particularly for applications in high-performance and safety-critical industries. To address these issues, advanced post-processing techniques-such as interlayer treatments, in-situ thermal regulation, and targeted heat treatments-have been developed. These approaches are critical to mitigating microstructural variability and unlocking the full potential of additive manufacturing technologies.

One major issue stems from the significant variation in cooling rates throughout the build. Initial layers, in direct contact with the substrate, cool rapidly and solidify quickly, leading to finer microstructures. In contrast, as the build progresses, heat accumulates in the workpiece, reducing the cooling rate and resulting in slower solidification for the upper layers. This thermal inconsistency not only affects the microstructure but also leads to variations in layer thickness.

Another critical challenge in layer-by-layer additive manufacturing processes is distortion, which arises from thermal gradients and residual stresses generated during deposition. Localized heating during material deposition and subsequent cooling result in nonuniform thermal expansion and contraction across the component. As heat accumulates during the build-particularly in larger or complex geometries-the risk of warping and dimensional inaccuracies increases. These deformations are further influenced by factors such as build orientation, geometry, and material properties, making distortion a persistent issue. Such geometric deviations can compromise structural integrity and are especially problematic in applications requiring high dimensional precision. Consequently, post-build inspection methods, such as three-dimensional (3D) scanning, are often required to measure and compensate for these deviations prior to any subsequent processing, such as machining. These additional steps not only increase process complexity but also contribute to higher manufacturing costs and longer lead times. Distortion mitigation, therefore, remains a key objective in advancing the reliability and efficiency of additive manufacturing workflows.

There is a continuing need to address the thermal and geometrical challenges associated with layer-by-layer additive manufacturing processes. In particular, strategies for regulating the thermal state of deposited material and minimizing distortion are essential to enhance dimensional accuracy, mechanical consistency, and process efficiency. Despite ongoing developments, existing solutions often remain limited in scope or require complex interventions that may not be compatible with large-scale or high-throughput production environments. Accordingly, there is a need for improved methods and systems that enable effective thermal management and distortion control during additive manufacturing, particularly in applications demanding high reliability and precision.

### Summary of the invention

It is an object of the present invention to provide a method and a robotic additive manufacturing system for regulating the thermal state of a deposition layer in a layer-by-layer additive manufacturing process, such as WAAM, in order to enhance structural and surface integrity performance, reduce distortion, and improve overall quality and reliability of the fabricated components.

The above objective is accomplished by the solution according to the present invention.

In a first aspect, the invention relates to a method for regulating a thermal state of a deposition layer in a layer-by-layer additive manufacturing process, wherein said deposition layer being deposited from a material deposition tool on a substrate along a deposition direction, the method comprising: monitoring, using thermal monitoring means, a thermal state of said deposition layer, wherein said thermal state is represented by a cooling rate and a temperature at one or more locations and/or within a zone of said deposition layer; calculating, based on a comparison between said monitored thermal state of said deposition layer and predetermined threshold values of desired cooling rates and/or temperatures, an amount of heat to be applied to said one or more locations and/or within said zone of said deposition layer, wherein said amount of heat is sufficient to modify said monitored thermal state to at least the predetermined threshold temperature; applying, using an external heating system, said calculated amount of heat to said one or more locations and/or within said zone of said deposition layer, thereby regulating the thermal state of said deposition layer. It is an advantage that the method allows for precise thermal control by continuously monitoring the cooling rate and temperature of the deposition layer, as described in the claim. This ensures timely intervention when specific cooling rates or temperature thresholds are reached. Additionally, the use of an external heating system enables localized heat application, which precisely regulates the cooling rate at specific locations or within designated zones. This targeted approach prevents thermal stresses and defects, thereby enhancing the structural integrity and quality of the deposited material. Overall, the method improves the structural and surface integrity performance of the additive manufactured components, optimizing material properties and ensuring high-quality production.

According to a specific embodiment of the present invention, the method further comprises: determining, based on said calculated amount of heat, one or more positions for said external heating system with respect to said deposition tool and said deposition layer; and positioning, based on said determined one or more positions, said external heating system approximate to and downstream of said material deposition tool before, during and/or after applying said calculated amount of heat. It is an advantage that this specific embodiment of the present invention, further comprises determining one or more positions for the external heating system based on the calculated amount of heat. This ensures that the external heating system is positioned approximate to and downstream of the material deposition tool with respect to the deposition layer. By accurately positioning the heating system before, during, and/or after applying the calculated amount of heat, the method enhances the precision of thermal regulation and to regulate the cooling rate and/or temperature of the deposition layer. This targeted approach prevents thermal stresses and defects, thereby improving the structural integrity and quality of the deposited material. Overall, the method enhances the structural and surface integrity performance of the additive manufactured components, optimizing material properties and ensuring high-quality production.

According to a specific embodiment of the present invention, a step of material deposition occurs before, during or after the steps of monitoring, calculating, applying, determining or positioning. This flexibility in the timing of material deposition ensures that the thermal state of the deposition layer can be precisely regulated at various stages of the additive manufacturing process. By accommodating material deposition at different points, the method enhances the precision of thermal control, preventing thermal stresses and defects, and improving the structural integrity and quality of the deposited material.

According to a particular embodiment of the present invention, it further comprises a step of dynamically adjusting the number of locations at said deposition layer to which said calculated amount of heat is applied, wherein the number of locations is increased if the cooling rate or temperature at multiple locations deviates from predetermined threshold values of desired cooling rates and/or temperatures. It is an advantage that this dynamic adjustment ensures that the number of locations is increased if the cooling rate or temperature at multiple locations deviates from predetermined threshold values of desired cooling rates and/or temperatures. By precisely regulating the thermal conditions at multiple locations, the method prevents thermal stresses and defects, thereby improving the structural integrity and quality of the deposited material.

According to a specific embodiment of the present invention, the predetermined threshold values of desired temperatures are in the range of 800°C to 500°C. This specific temperature range ensures that the thermal conditions of the deposition layer are maintained within optimal limits. By precisely regulating the temperature within this range, the method prevents thermal stresses and defects, thereby improving the structural integrity and quality of the deposited material.

According to a particular embodiment of the present invention, the external heating system is an induction heating system for inductive heating one or more locations and/or zones of said deposition layer. This ensures precise thermal regulation by utilizing inductive heating, which allows for targeted application of heat to specific areas of the deposition layer. By controlling the cooling rate and temperature at these locations, the method prevents thermal stresses and defects, thereby improving the structural integrity and quality of the deposited material.

In a further embodiment according to the previous embodiment, the method further comprising: determining one or more positions of said induction heating system with respect to said deposition tool, wherein said one or more positions are derived from said amount of heat, characteristics of said additive manufacturing process, such as energy source, material properties, or deposition speed, and predetermined characteristics of said induction heating system, such as power output and magnetic field strength; and positioning, based on said determined one or more positions, said induction heating system approximate to and downstream of said material deposition tool before, during and/or after applying said calculated amount of heat. This ensures that the induction heating system is optimally positioned to provide precise thermal regulation. By accurately positioning the heating system before, during, and/or after applying the calculated amount of heat, the method enhances the precision of thermal control, preventing thermal stresses and defects, and improving the structural integrity and quality of the deposited material. Overall, the method enhances the structural and surface integrity performance of the additive manufactured components, optimizing material properties and ensuring high-quality production.

According to a specific embodiment of the present invention, the deposition material comprises any stainless steel or nickel-based superalloys. These materials demonstrated excellent mechanical properties, high strength, and resistance to corrosion and high temperatures. By using stainless steel or nickel-based superalloys, the method ensures that the deposited layers have superior structural integrity and durability. This choice of materials enhances the overall performance and reliability of the additive manufactured components, making them suitable for demanding applications in various industries

According to another aspect, the invention relates to a robotic additive manufacturing system for regulating a thermal state of a deposition layer in a layer-by-layer additive manufacturing process, comprising: a material deposition tool configured to deposit a deposition layer along a deposition direction; thermal monitoring means configured to monitor a thermal state of said deposition layer, wherein said thermal state is represented by a cooling rate and a temperature at one or more locations and/or within a zone of said deposition layer; a control unit configured to calculate, based on a comparison between said monitored thermal state of said deposition layer and predetermined threshold values of desired cooling rates and/or temperatures, an amount of heat to be applied to said one or more locations and/or within said zone of said deposition layer, wherein said amount of heat is sufficient to modify said monitored thermal state to at least the predetermined threshold temperature; an external heating system configured to apply said calculated amount of heat to said one or more locations and/or within said zone of said deposition layer, thereby regulating the thermal state of said deposition layer; and a positioning mechanism configured to position said external heating system approximate to and downstream of said material deposition tool before, during, and/or after applying said calculated amount of heat. This integrated system ensures precise thermal regulation by continuously monitoring the cooling rate and temperature of the deposition layer. The control unit calculates the necessary amount of heat based on the monitored thermal state and predetermined threshold values, while the external heating system applies this calculated heat to specific locations or zones. The positioning mechanism ensures that the heating system is optimally placed relative to the deposition tool, enhancing the precision of thermal control. This targeted approach prevents thermal stresses and defects, thereby improving the structural integrity and quality of the deposited material. Overall, the system enhances the structural and surface integrity performance of the additive manufactured components, optimizing material properties and ensuring high-quality production.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.
Fig.1 is a flow chart illustrating an example of a method according to the present invention.
Fig.2 illustrates a robotic additive manufacturing system according to embodiments of the present invention.
Fig.3 illustrates an example of a step of a method and a robotic additive manufacturing system according to embodiments of the present invention.
Fig.4 illustrates an example of a step of a method and a robotic additive manufacturing system according to embodiments of the present invention.
Fig.5 is a flow chart illustrating an example of a method according to the present invention.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

When reference herein is made to "the thermal state of a deposited layer", reference may be made to the temperature conditions within and on the surface of the deposited material during and after deposition. It is represented by both the temperature and the cooling rate of the layer. The temperature is the immediate temperature measured at the surface of the deposited material, while the cooling rate describes how quickly the material cools down after deposition. Both the temperature and cooling rate are key factors in determining the solidification behavior, microstructure, residual stresses, and overall mechanical properties of the deposited layer. The thermal state is influenced by various factors, such as heat input from the deposition process, environmental conditions, and the interaction between consecutive layers. The temperature refers to the temperature at the top surface of the deposited material, typically measured in real-time during the deposition process. The cooling rate is the rate at which the deposited material cools after the heat source (e.g., laser, arc, or electron beam) is removed or moved away. It is a critical factor in controlling the solidification process and affects the final material properties, such as grain structure, hardness, and stress distribution within the part.

Regulating the thermal state of a deposition layer refers to the process of actively controlling or adjusting the temperature distribution, cooling rate, or heat input within the layer during the additive manufacturing process. This may include monitoring and modifying the thermal conditions using various techniques, such as adjusting the energy input (e.g., power or speed of the heat source), using cooling mechanisms, or employing thermal feedback control systems to ensure the desired thermal behavior, optimize material properties, minimize distortion, and maintain the structural and surface integrity of the deposited layer.

The present invention relates to a method for regulating a thermal state of a deposition layer in a layer-by-layer additive manufacturing process. In particular, the invention provides a solution for enhance structural and surface integrity performance, reduce distortion, and improve overall quality and reliability of the fabricated components. As described before, conventional approaches encounter issues like significant variation in cooling rates throughout the build. Initial layers, in direct contact with the substrate, cool rapidly and solidify quickly, leading to finer microstructures, whereas as the build progresses, heat accumulates in the workpiece, reducing the cooling rate and resulting in slower solidification for the upper layers. This thermal inconsistency not only affects the microstructure but also leads to variations in layer thickness. Another critical challenge in layer-by-layer additive manufacturing processes is distortion, which arises from thermal gradients and residual stresses generated during deposition.

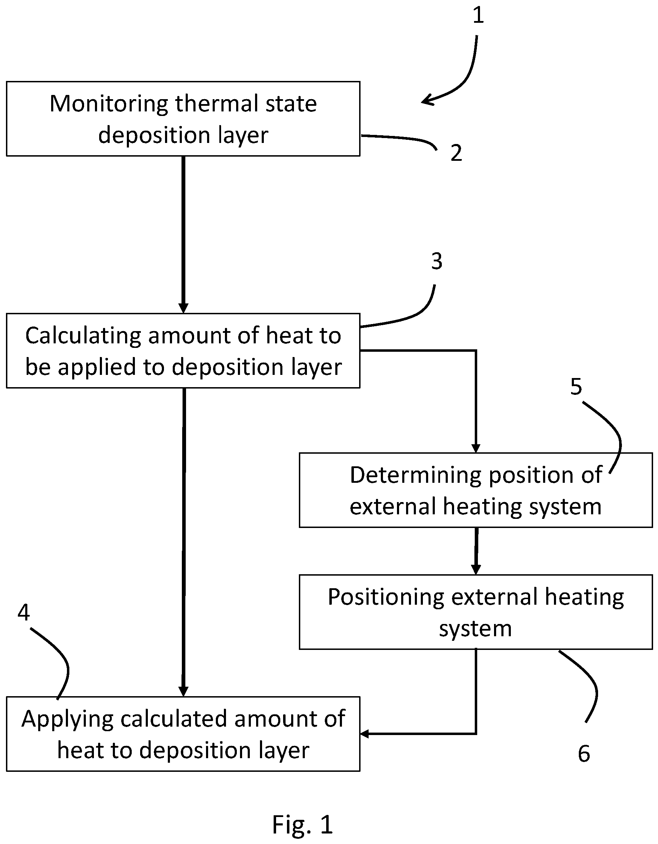

Referring to Figure 1, a method 1 for regulating a thermal state of a deposition layer in a layer-by-layer additive manufacturing process according to an embodiment of the invention includes the following steps, which are described in detail below. First, by using thermal monitoring means, a thermal state of a deposition layer is monitored 2. This thermal state is represented or defined by at least the cooling rate and the temperature at one or more locations at the surface of the deposited layer. The thermal state may also be monitored for or within a zone of the deposition layer. A zone may refer to a specific region or area within the deposition layer where certain thermal properties are measured or controlled. This can include variations in temperature, cooling rates, or other thermal characteristics.

Thereafter, a control unit is configured to calculate an amount of heat to be applied to said one or more locations and/or within said zone of said deposition layer 3, wherein said amount of heat is sufficient to modify said monitored thermal state to at least the predetermined threshold temperature. This amount of heat is determined by comparing the measured monitored thermal state of the deposition layer and predetermined threshold values of desired cooling rates and/or temperatures at one or more locations at the surface or within the deposition layer, or within zones of said deposition layer. For the purposes of this invention, "predetermined threshold values" refer to predefined numerical values or ranges that define the desired cooling rates, temperatures, or thermal conditions at one or more locations on or within the deposition layer, or within specific zones of the deposition layer during a layer-by-layer additive manufacturing process. These threshold values are established prior to the commencement of the manufacturing process based on material properties, desired product characteristics, and process optimization criteria.

The predetermined threshold values may correspond to specific cooling rates (e.g., a defined rate of temperature change per unit time) or specific temperature limits (e.g., maximum or minimum temperature thresholds) for various regions, such as the surface of the deposition layer or specific internal zones. These values are critical for ensuring that the thermal state of the deposition layer is maintained within optimal or desired ranges to minimize issues such as distortion, residual stresses, or other thermal effects that could negatively impact the structural integrity or performance of the final product.

In some embodiments, the predetermined threshold values may be determined based on empirical data, simulations, or material-specific properties, and they can be stored in a controller or processing unit for real-time comparison with actual measured thermal data. If the actual thermal conditions deviate from the predetermined threshold values, the system may be configured to adjust process parameters, such as heat input or cooling strategies, to bring the thermal state back within the desired range.

In a third step 4, following the monitoring and calculation step, the calculated amount of heat is applied to the one or more locations at or within the deposition layer, or within a zone of said deposition layer. The application of this amount of heat is performed using an external heating system, as further described below. By applying the calculated amount of heat, the cooling rate and temperature of the deposition layer may be locally regulated, which improves the structural and surface integrity performance of the additive manufactured components, optimizing material properties and ensuring high-quality production.

According to embodiments of the present invention, a processing unit or control unit may be configured to determine 5 one or more positions for the external heating system with respect to the material deposition tool and the deposition layer. Based on this determined one or more positions, the external heating system may be positioned 6 approximate to and downstream of the material deposition tool. The positioning of the external heating system may be performed before, during and/or after the application of the calculated amount of heat to one or more position of or within the deposition layer, or within a zone of the deposition layer.

A step of material deposition may occur before, during or after the steps of monitoring 2, calculating 3, applying 4, determining 5 or positioning 6.

Embodiments of the present invention may also comprise a step to dynamically adjust the number of locations at the deposition layer to which the calculated 3 amount of heat is applied. This allows for a better control of the cooling rate and/or temperature of the deposition layer, and consequently the quality of the printed parts. The number of locations is increased if the cooling rate or temperature at multiple locations deviates from predetermined threshold values of desired cooling rates and/or temperatures.

The predetermined threshold values of the desired temperatures are in the range of 800°C to 500°C. By defining predetermined threshold values of desired temperatures within the range of 800°C to 500°C, the method ensures that the thermal state of the deposition layer remains within a controlled temperature window during cooling. This targeted control contributes to a more predictable microstructural evolution in the deposited material, particularly in metal additive manufacturing processes.

Maintaining the temperature above a lower threshold (e.g., 500°C) helps prevent excessive cooling rates, which may otherwise induce high thermal gradients, internal stresses, and resulting distortions or cracking. Conversely, ensuring that the temperature does not exceed an upper limit (e.g., 800°C) minimizes undesirable grain growth or melting of previously deposited layers, which could negatively affect structural integrity.

Thus, the use of such temperature threshold values provides a technical effect of improving the thermal stability of the deposition layer, enhancing the consistency of mechanical properties, and reducing post-processing efforts related to residual stress correction or distortion compensation.

The external heating system may be an induction heating system configured for inductive heating one or more locations at or within the deposition layer, or one or more zones of said deposition layer. The use of inductive heating provides several advantages. It enables localized, rapid, and non-contact heating of specific regions of the deposited material, thereby facilitating precise control over temperature profiles at or near the surface of the deposition layer. Such control reduces thermal gradients and minimizes residual stresses, which in turn limits the occurrence of distortion or warping in the fabricated component. Additionally, inductive heating is energy-efficient, as it directly heats the material without affecting the surrounding environment, resulting in lower overall energy consumption. The fast response time of the inductive heating system further allows real-time adjustments to heating parameters based on in-situ monitoring, thereby improving the consistency and structural integrity of the final part.

In an embodiment wherein the external heating system is an inductive heating system, additional steps may be performed to further enhance thermal regulation during the deposition process. For example, one or more positions of the inductive heating system with respect to the deposition tool may be determined, wherein said one or more positions are derived from the calculated amount of heat 3, characteristics of said additive manufacturing process, such as energy source, material properties, or deposition speed, and predetermined characteristics of said induction heating system, such as power output and magnetic field strength. Thereafter, the inductive heating system may be positioned approximate to and downstream of said material deposition tool before, during and/or after applying said calculated amount of heat.

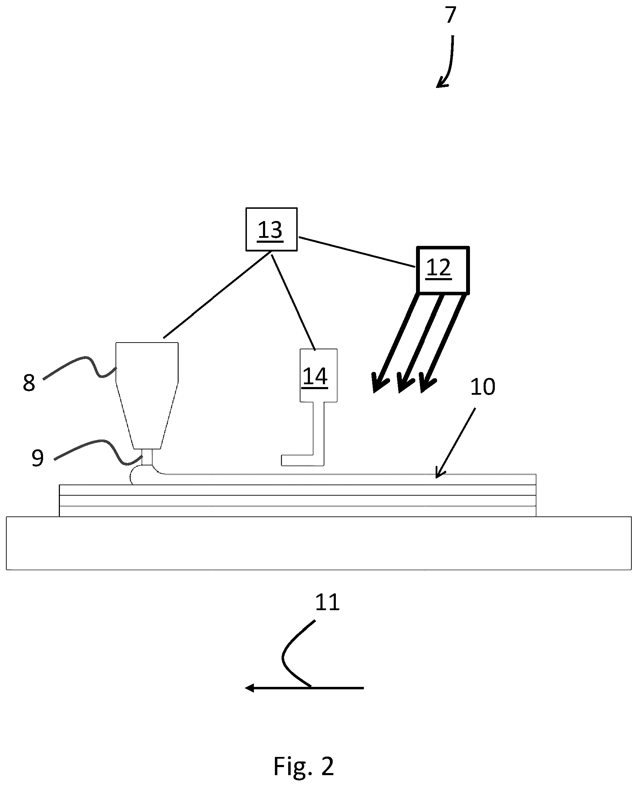

Figure 2 depicts a schematic view of a robotic additive manufacturing system 7 for regulating a thermal state of deposition layer in a layer-by-layer additive manufacturing process, according to an embodiment of the present invention. The system comprises a material deposition tool 8, 9 configured to deposit a deposition layer 10 along a deposition direction 11. The system further comprises thermal monitoring means 12 configured to monitor a thermal state of said deposition layer 10. As described in relation to embodiments of the method according to the present invention, said thermal state is represented by a cooling rate and a temperature at one or more locations, or within a zone of said deposition layer 10. The system further comprises a control unit 13 configured to calculate, based on a comparison between said monitored thermal state of said deposition layer and predetermined threshold values of desired cooling rates and/or temperatures, an amount of heat to be applied to said one or more locations and/or within said zone of said deposition layer. The amount of heat is sufficient to modify said monitored thermal state to at least the predetermined threshold temperature.

The control unit 13 may be operatively connected to one or more components of the additive manufacturing system, including but not limited to thermal monitoring means 12, heating systems 14, the material deposition tool 8, 9, and positioning mechanisms. The connection between the control unit and these components may be established through wired communication interfaces, such as electrical or data cables, or alternatively via wireless communication protocols, including but not limited to Wi-Fi, Bluetooth^{®}, or other suitable radio frequency-based technologies. The use of wireless connectivity may provide greater flexibility in system integration, particularly in modular or mobile setups, whereas wired configurations may be preferred in environments requiring robust and interference-resistant data transmission.

The system 7 further comprises an external heating system 14 configured to apply said calculated amount of heat to said one or more locations and/or within said zone of said deposition layer 10, thereby regulating the thermal state of said deposition layer. As described before, this external heating system may be an inductive heating system.

The robotic additive manufacturing system further comprises a positioning mechanism configured to position said external heating system 14 approximate to and downstream of said material deposition tool 8, 9 before, during, and/or after applying said calculated amount of heat.

In one embodiment, the additive manufacturing system comprises a computer numerical control (CNC) manipulator configured to control the relative movement between the material deposition tool and the workpiece or build platform. The CNC manipulator may include one or more actuated axes enabling precise positioning and motion control in multiple directions, such as X, Y, and Z, and optionally rotational axes. This allows for the accurate layer-by-layer deposition of material along predefined toolpaths. The integration of a CNC manipulator enhances the system's capability to produce complex geometries with high dimensional accuracy and repeatability. The CNC manipulator may be operatively linked to a control unit, which governs its operation in coordination with the deposition and thermal regulation processes.

The term "material deposition tool" as used herein is intended to broadly encompass all components involved in the delivery and deposition of the material during the additive manufacturing process. This includes, but is not limited to, the deposition nozzle, any associated heating elements (such as resistance heaters, plasma torches, laser-based heaters, or inductive heating means), as well as mechanisms configured to guide, pass, or feed the deposition material (e.g., wire feeders, powder dispensers, or extrusion drives). The material deposition tool may thus integrate one or more functional subsystems configured to ensure the proper melting, positioning, and flow of the deposition material onto the build surface or the previously deposited layers. In embodiments related to wire-based additive manufacturing, such as WAAM, the material deposition tool typically comprises a wire feed mechanism and a welding torch or nozzle, which may be operatively connected to an arc or plasma-based heating source. In other embodiments, such as extrusion-based or powder-bed systems, the tool may include a heated extrusion head or laser-assisted nozzle, respectively. The integrated configuration of the material deposition tool allows for precise control over the deposition rate, heat input, and thermal history of the component being built.

For the purposes of this invention, "thermal monitoring means" refers to any suitable system or apparatus configured to monitor and detect thermal characteristics, such as temperature, thermal gradients, or cooling rates, during a deposition or manufacturing process. The thermal monitoring means may comprise one or more sensors or measurement devices, such as infrared thermometers, thermocouples, thermal cameras, or fiber optic sensors, that are capable of obtaining real-time temperature data from the deposition layer or surrounding environment. The thermal monitoring means are used to continuously or periodically measure the thermal state of the deposition layer and provide feedback to the system for regulating or adjusting the thermal state as required.

In one embodiment, the thermal monitoring means may be integrated into the manufacturing system, positioned in proximity to the deposition area, and configured to transmit temperature data to a controller or processing unit for analysis and adjustment of operational parameters, such as the heat input or cooling rates. The monitoring means may also be connected to a user interface for visualization and analysis of the thermal data.

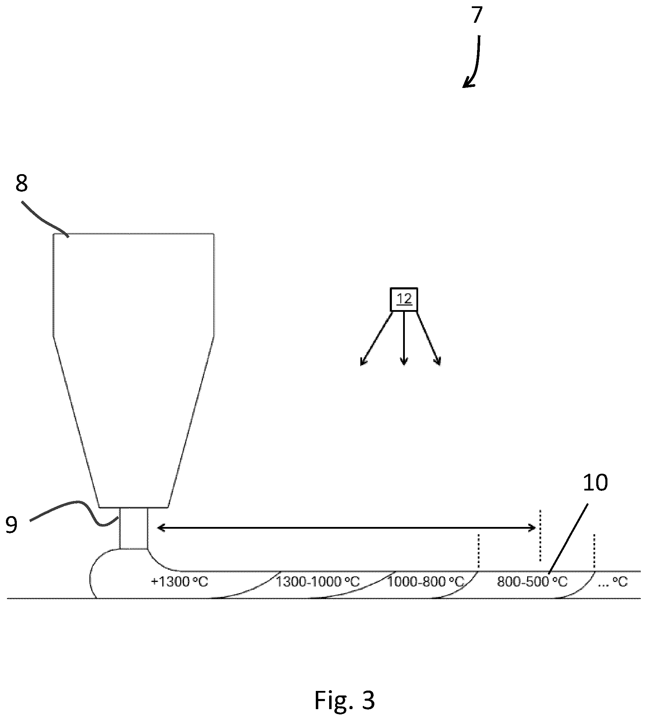

Figures 3 to Z schematically illustrates particular steps of the method during a WAAM layer-by-layer additive manufacturing process.

Figure 3 illustrates the initiating of the deposition of the entire geometry using Wire Arc Additive Manufacturing (WAAM), wherein a preliminary step involves the deposition of a single bead or deposition layer 10. This initial bead 10 is deposited utilizing the specified WAAM parameters to ensure consistency and accuracy in the subsequent layers. During the deposition of this single bead, a thermal camera 12 is employed to monitor the thermal state, like for example, the temperature distribution across the deposition layer's surface. The thermal camera 12 provides real-time data on the temperature variations at different locations of the deposition layer 10, allowing for precise control and adjustment of the WAAM process. The temperature distribution data is analyzed to identify specific areas where the temperature ranges between 800°C and 500°C. These temperature ranges are critical for ensuring the desired metallurgical properties and structural integrity of the deposited material. By identifying these areas, adjustments can be made to the WAAM parameters to optimize the deposition process and achieve the required thermal state according to embodiments of the present invention. This method of monitoring and adjusting the temperature distribution ensures that the final geometry will have uniform thermal properties, reducing the likelihood of defects and enhancing the overall quality of the manufactured component.

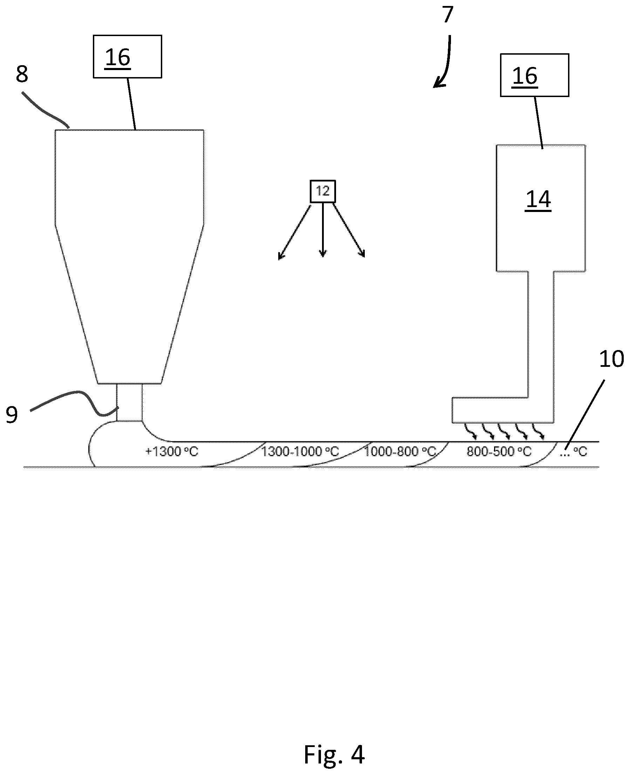

Referring to Figure 4 and following the identification of the optimal location using the deposition of a single deposition layer 10, and induction heating system 14 is strategically positioned behind the welding torch 8. This positioning is based on the temperature distribution data obtained during the initial deposition of the deposition layer 10, ensuring that the induction heating is applied precisely to the corresponding area during the full deposition process. During the deposition process, induction heating is continuously applied to the identified area to maintain the desired thermal state. The application of induction heating helps in achieving uniform temperature distribution, which is crucial for the structural integrity and metallurgical properties of the deposited material.

A data acquisition (DAQ) system 16 may be employed to monitor the stability of the welding arc throughout the deposition process. The DAQ system collects real-time data on the welding arc's behavior and stability, allowing for precise adjustments to be made. One of the critical functions of the DAQ system 16 is to determine the minimum distance between the welding torch and the induction heating source. This ensures that the welding arc remains stable and does not get disrupted by the induction heating, thereby maintaining the quality and consistency of the deposition. By integrating induction heating and a DAQ system, the deposition process is optimized for stability and quality, resulting in high-quality manufactured components with uniform thermal properties.

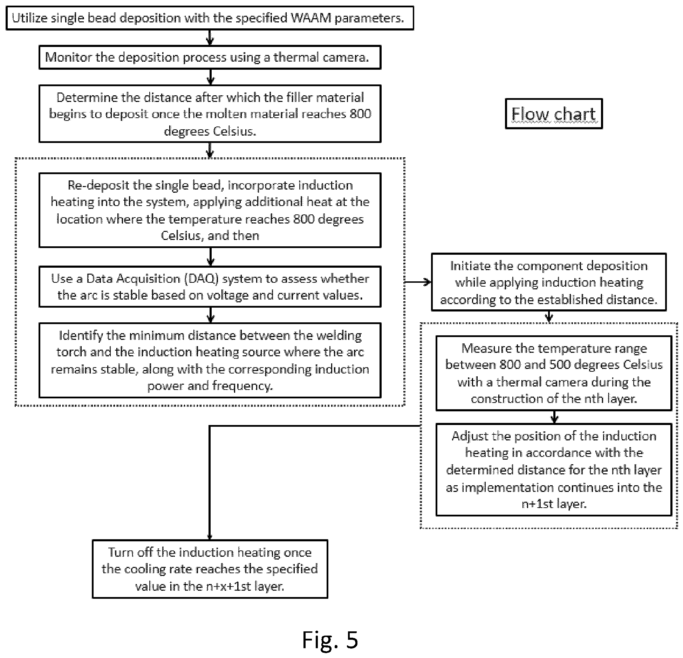

Referring to Figure 5, the process begins with the deposition of a single bead using the specified WAAM parameters. This initial step ensures that the parameters are correctly set and provides a baseline for further adjustments. During this deposition, the position where the filler material begins to deposit is identified once the stable metal arc reaches a temperature of 800°C. This critical temperature point is used to guide subsequent steps in the process.

Following the initial bead deposition, the single bead is re-deposited with the incorporation of induction heating. Induction heating is applied to the area where the temperature reaches 800°C, ensuring that the thermal state is maintained. A DAQ system is employed to monitor the stability of the welding arc, assessing voltage and current values to determine the arc's behavior. The DAQ system helps identify the minimum distance between the welding torch and the induction heating source, ensuring that the arc remains stable and does not get disrupted by the induction heating.

Once the optimal distance and induction heating parameters are established, the deposition of the entire component begins. Induction heating is applied at the identified position throughout the deposition process. The temperature range between 800°C and 500°C is continuously measured during the deposition of each layer or bead sequence in real-time using the DAQ system. This real-time monitoring allows for precise adjustments to the induction heating position based on the determined distance for each subsequent layer. The induction heating is turned off once the cooling rate reaches the specified value in the next layer, ensuring uniform thermal properties and high-quality manufactured components.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method for regulating a thermal state of a deposition layer in a layer-by-layer additive manufacturing process, wherein said deposition layer being deposited from a material deposition tool on a substrate along a deposition direction, the method comprising:
monitoring, using thermal monitoring means, a thermal state of said deposition layer, wherein said thermal state is defined by a cooling rate and a temperature at one or more locations, or within a zone of said deposition layer;
calculating, based on a comparison between said monitored thermal state of said deposition layer and predetermined threshold values of desired cooling rates and/or temperatures, an amount of heat to be applied to said one or more locations and/or within said zone of said deposition layer, wherein said amount of heat is sufficient to modify said monitored thermal state to at least the predetermined threshold temperature;
applying, using an external heating system, said calculated amount of heat to said one or more locations and/or within said zone of said deposition layer, thereby regulating the thermal state of said deposition layer.

2. The method according to Claim 1, further comprising:
determining, based on said calculated amount of heat, one or more positions for said external heating system with respect to said deposition tool and said deposition layer; and
positioning, based on said determined one or more positions, said external heating system approximate to and downstream of said material deposition tool before, during and/or after applying said calculated amount of heat.

3. The method according to any one of the Claims 1 to 2, wherein a step of material deposition occurs before, during or after the steps of monitoring, calculating, applying, determining or positioning.

4. The method according to any one of the Claims 1 to 3, further comprising a step of dynamically adjusting the number of locations at said deposition layer to which said calculated amount of heat is applied, wherein the number of locations is increased if the cooling rate or temperature at multiple locations deviates from predetermined threshold values of desired cooling rates and/or temperatures.

5. The method according to any one of the Claims 1 to 4, wherein said predetermined threshold values of desired temperatures are in the range of 800°C to 500°C.

6. The method according to any one of the Claims 1 to 5, wherein the external heating system is an induction heating system for inductive heating one or more locations and/or zones of said deposition layer.

7. The method according to the previous Claim, further comprising:
determining one or more positions of said induction heating system with respect to said deposition tool, wherein said one or more positions are derived from said amount of heat, characteristics of said additive manufacturing process, such as energy source, material properties, or deposition speed, and predetermined characteristics of said induction heating system, such as power output and magnetic field strength; and
positioning, based on said determined one or more positions, said induction heating system approximate to and downstream of said material deposition tool before, during and/or after applying said calculated amount of heat.

8. The method according to any one of the previous Claims, wherein the deposition material comprises any stainless steel or nickel-based superalloys.

9. A robotic additive manufacturing system for regulating a thermal state of a deposition layer in a layer-by-layer additive manufacturing process, comprising:
a material deposition tool configured to deposit a deposition layer along a deposition direction;
thermal monitoring means configured to monitor a thermal state of said deposition layer, wherein said thermal state is represented by a cooling rate and a temperature at one or more locations, or within a zone of said deposition layer;
a control unit configured to calculate, based on a comparison between said monitored thermal state of said deposition layer and predetermined threshold values of desired cooling rates and/or temperatures, an amount of heat to be applied to said one or more locations and/or within said zone of said deposition layer, wherein said amount of heat is sufficient to modify said monitored thermal state to at least the predetermined threshold temperature;
an external heating system configured to apply said calculated amount of heat to said one or more locations and/or within said zone of said deposition layer, thereby regulating the thermal state of said deposition layer; and
a positioning mechanism configured to position said external heating system approximate to and downstream of said material deposition tool before, during, and/or after applying said calculated amount of heat.

10. The robotic additive manufacturing system according to claim 9, wherein said control unit is further configured to determine one or more positions for said external heating system with respect to said deposition tool and said deposition layer based on said calculated amount of heat.

11. The robotic additive manufacturing system according to the previous Claim, wherein said positioning mechanism is configured to position said external heating system based on said determined one or more positions.

12. The robotic additive manufacturing system according to any one of the Claims 9 to 11, wherein said material deposition tool is configured to deposit material before, during, or after the steps of monitoring, calculating, applying, determining, or positioning.

13. The robotic additive manufacturing system according to any one of the Claims 9 to 12, further comprising a mechanism for dynamically adjusting the number of locations at said deposition layer to which said calculated amount of heat is applied, wherein the number of locations is increased if the cooling rate or temperature at multiple locations deviates from predetermined threshold values of desired cooling rates and/or temperatures.

14. The robotic additive manufacturing system according to any one of the Claims 9 to 13, wherein said predetermined threshold values of desired temperatures are in the range of 800°C to 500°C.

15. The robotic additive manufacturing system according to any one of the Claims 9 to 14, wherein said external heating system is an induction heating system for inductive heating one or more locations and/or zones of said deposition layer, and wherein said control unit is further configured to determine one or more positions of said induction heating system with respect to said deposition tool, wherein said one or more positions are derived from said amount of heat, characteristics of said additive manufacturing process, such as energy source, material properties, or deposition speed, and predetermined characteristics of said induction heating system, such as power output and magnetic field strength.
